(19) **Europäisches Patentamt**
European Patent Office
Office européen des brevets

(11) **EP 2 337 685 B1**

(12) **EUROPÄISCHE PATENTSCHRIFT**

(45) Veröffentlichungstag und Bekanntmachung des Hinweises auf die Patenterteilung:
**01.02.2012 Patentblatt 2012/05**

(21) Anmeldenummer: **09778305.4**

(22) Anmeldetag: **03.09.2009**

(51) Int Cl.:
**B32B 27/36** *(2006.01)*

(86) Internationale Anmeldenummer:
**PCT/EP2009/006385**

(87) Internationale Veröffentlichungsnummer:
**WO 2010/028774 (18.03.2010 Gazette 2010/11)**

(54) **SIEGELFÄHIGE, BIAXIAL ORIENTIERTE POLYESTERFOLIE**

SEALABLE, BIAXIALLY ORIENTED POLYESTER FILM

FILM DE POLYESTER BIAXIALEMENT ORIENTÉ, SCELLABLE

(84) Benannte Vertragsstaaten:
**DE FR GB IT LU**

(30) Priorität: **11.09.2008 DE 102008046781**

(43) Veröffentlichungstag der Anmeldung:
**29.06.2011 Patentblatt 2011/26**

(73) Patentinhaber: **Mitsubishi Polyester Film GmbH**
**65203 Wiesbaden (DE)**

(72) Erfinder:
• **KONRAD, Matthias**
**65830 Kriftel (DE)**

• **KUHMANN, Bodo**
**65594 Runkel (DE)**
• **HILKERT, Gottfried**
**55291 Saulheim (DE)**
• **PEIFFER, Herbert**
**55126 Mainz (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
**EP-A- 0 035 835 WO-A-01/60609**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine siegelfähige, biaxial orientierte Polyesterfolie, umfassend eine Basisschicht B, eine siegelfähige Deckschicht A und eine nicht siegelfähige Deckschicht C. Die Erfindung betrifft weiterhin ein Verfahren zur Herstellung der Folie und ihre Verwendung.

Siegelfähige, biaxial orientierte Polyesterfolien sind bekannt.

In der GB-A-1465 973 wird eine coextrudierte, zweischichtige Polyesterfolie beschrieben, deren eine Schicht aus isophthalsäure- und terephthalsäurehaltigen Copolyestern und deren andere Schicht aus Polyethylenterephthalat besteht. Über das Siegelverhalten der Folie finden sich in der Schrift keine verwertbaren Angaben. Wegen fehlender Pigmentierung ist die Folie nicht wickelbar und nicht weiterverarbeitbar.

In der EP-A-0 035 835 wird eine coextrudierte siegelfähige Polyesterfolie beschrieben, der zur Verbesserung des Wickel- und des Verarbeitungsverhaltens in der Siegelschicht Partikel zugesetzt werden, deren mittlere Teilchengröße die Schichtdicke der Siegelschicht übersteigt. Durch die teilchenförmigen Zusatzstoffe werden Oberflächenvorsprünge gebildet, die das unerwünschte Blocken und Kleben der Folie an Walzen oder Führungen verhindern. Es bleibt offen, ob die andere, nicht siegelfähige Schicht der Folie Antiblockmittel enthält. Die Siegelnahtfestigkeit wird bei 140 °C gemessen und liegt in einem Bereich von 63 bis 120 N/m (entsprechend 0,97 bis 1,8 N/15 mm Folienbreite).

In der EP-A-0 515 096 wird eine coextrudierte, mehrschichtige, siegelfähige Polyesterfolie beschrieben, die auf der siegelfähigen Schicht ein zusätzliches Additiv enthält. Das Additiv kann z. B. anorganische Partikeln enthalten und wird vorzugsweise als wässrige Schicht auf die Folie bei deren Herstellung aufgetragen. Hierdurch sollen die guten Siegeleigenschaften beibehalten werden und die Folie gut zu verarbeiten sein. Die Rückseite der Folie enthält nur sehr wenige Partikeln, die hauptsächlich über das Regranulat (Regenerat) in diese Schicht gelangen. Angaben zum Siegeltemperaturbereich der Folie werden in dieser Schrift nicht gemacht. Die Siegelnahtfestigkeit wird bei 140 °C gemessen und beträgt mehr als 200 N/m (entsprechend 3 N/15 mm Folienbreite). Für eine 3 $\mu$m dicke Siegelschicht wird eine Siegelnahtfestigkeit von 275 N/m (entsprechend 4,125 N/15 mm Folienbreite) angegeben.

In der EP-A-1 138 480 wird eine biaxial orientierte, siegelfähige Polyesterfolie mit einer Basisschicht B, einer siegelfähigen Deckschicht A und einer weiteren, nicht siegelfähigen Deckschicht C beschrieben. Die siegelfähige Deckschicht A hat eine Mindestsiegeltemperatur von maximal 110°C und eine Siegelnahtfestigkeit von mindestens 1,3 N/15 mm Folienbreite. Die Topographien der beiden Deckschichten A und C sind durch bestimmte Merkmale gekennzeichnet. Die erfindungsgemäße Folie eignet sich besonders für den Einsatz in flexiblen Verpackungen, und zwar insbesondere für den Einsatz auf schnelllaufenden Verpackungsmaschinen. Mit dieser Folie lässt sich nur eine sehr geringe Haftung gegen PVC erreichen.

Aufgabe der vorliegenden Erfindung war es nun, eine siegelfähige, biaxial orientierte Polyesterfolie bereitzustellen, die sich insbesondere durch

• eine niedrige Mindestsiegeltemperatur, bevorzugt von kleiner/gleich 105 °C, und
• eine hohe Siegelfähigkeit gegen sich selbst und Substrate aus PVC oder Metall bevorzugt von größer als 2,0 N/15 mm gegen sich selbst (FIN, gemessen bei 140 °C, 4 bar, 0,5 s), PVC und Metall (gemessen bei 180 °C, 4 bar, 0,5 s)

auszeichnet.

Ein besonderes Anliegen der vorliegenden Erfindung war es, eine Folie mit niedriger Mindestsiegeltemperatur von kleiner/gleich 105 °C und guter Siegelung gegen PVC-Folien und metallische Substrate zu entwickeln (Siegelnahtfestigkeit größer 2 N/15 mm). Bei der Herstellung der Folie soll zudem gewährleistet sein, dass anfallendes Verschnittmaterial als Regenerat in einer Menge von bis zu 60 Gew.-%, bezogen auf das Gesamtgewicht der Folie, wieder dem Herstellprozess zurückgeführt werden kann, ohne dass dabei die physikalischen und optischen Eigenschaften der Folie negativ beeinflusst werden.

Die Aufgabe wird erfindungsgemäß durch die Bereitstellung einer coextrudierten, dreischichtigen, biaxial orientierten, siegelfähigen Polyesterfolie mit einer Basisschicht B, einer siegelfähigen Deckschicht A und einer Deckschicht C gelöst, dadurch gekennzeichnet, dass

a) die Mindestsiegeltemperatur (FIN) kleiner/gleich 105 °C ist,
b) die Siegelnahtfestigkeit (FIN), gemessen bei 140 °C, 4 bar, 0,5 s, größer als 2,0 N/15 mm ist,
c) die Glasübergangstemperatur der Hauptkomponente der Deckschicht A kleiner als 70 °C ist,
d) der Schmelzpunkt der Hauptkomponente der Deckschicht A kleiner als 220 °C ist,
e) die siegelfähige Deckschicht A eine Dicke von 0,5 bis 10,0 $\mu$m hat,
f) die siegelfähige Deckschicht A Partikel in einer Konzentration im Bereich von 0 bis 0,5 Gew.-% (bezogen auf das Gewicht der Deckschicht A) enthält,
g) die nicht siegelfähige Deckschicht C Partikel in einer Konzentration von mehr als 0,05 Gew.-% (bezogen auf das Gewicht der Deckschicht C) enthält.

Erfindungsgemäß ist die Glasübergangstemperatur der Hauptkomponente der Deckschicht A kleiner als 70 °C, bevorzugt kleiner als 60 °C, besonders bevorzugt kleiner als 50 °C. Die Deckschicht besteht zu mindestens 70 Gew.-%, bevorzugt mindestens 80 Gew.-% und besonders bevorzugt mindestens 90 Gew.-%, aus diesem Polymer. Ist die Glasübergangstemperatur dieses Polymers größer als 70 °C, wird die gewünschte niedrige Mindestsiegeltemperatur nicht erreicht.

Der Schmelzpunkt der Hauptkomponente der Deckschicht A ist kleiner als 220 °C, bevorzugt kleiner als 200 °C, besonders bevorzugt kleiner als 180 °C. Ist der Schmelzpunkt der Hauptkomponente 220 °C oder größer, so ist die Siegelnahtfestigkeit nicht ausreichend.

Die Deckschicht A weist eine Dicke von 0,5 bis 10,0 $\mu$m auf, bevorzugt 0,7 bis 7,0 $\mu$m, besonders bevorzugt 1,0 bis 5,0 $\mu$m. Ist die Dicke der Deckschicht geringer als 0,5 $\mu$m, ist die Siegelnahtfestigkeit nicht ausreichend. Bei Deckschichten von größer 10 $\mu$m verschlechtert sich das Wickelverhalten der Folie.

Die siegelfähige Deckschicht A enthält Partikel in einer Konzentration von 0 bis 0,5 Gew.-%, bevorzugt von 0,01 bis 0,4 Gew.-%, besonders bevorzugt von 0,02 bis 0,3 Gew.-% (bezogen auf das Gewicht der Deckschicht A). Enthält die Deckschicht A mehr als 0,5 Gew.-% Partikel, ist die Siegelnahtfestigkeit der Folie zu gering.

Die nicht siegelfähige Deckschicht C enthält Partikel in einer Konzentration von mehr als 0,05 Gew.-%, bevorzugt mehr als 0,10 Gew.-%, besonders bevorzugt mehr als 0,15 Gew.-%. Enthält die Deckschicht C weniger als 0,05 Gew.-% Partikel, ist das Wickelverhalten der Folie schlecht. ,Nicht siegelfähig' bedeutet, dass die Deckschicht C zumindest in einer Siegeleigenschaft schlechtere Eigenschaften besitzt als die siegelfähige Deckschicht A, insbesondere eine Mindestsiegeltemperatur von größer 200 °C (FIN) aufweist.

Die Folie ist dreischichtig und umfasst die Basisschicht B, die siegelfähige Deckschicht A und die nicht siegelfähige Deckschicht C.

## Verwendete Polymere für die Basisschicht (B)

Die Basisschicht B der Folie besteht bevorzugt zu mindestens 90 Gew.-% aus einem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroximethyl-cyclohexan und Terephthalsäure [= Poly(1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, bevorzugt mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren.

Geeignete andere aliphatische Diole sind beispielsweise Diethylenglykol, Triethylenglykol, aliphatische Glykole der allgemeinen Formel HO-$(CH_2)_n$-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen (insbesondere Neopentylglykol). Von den cycloaliphatischen Diolen sind Cyclohexandiole (insbesondere Cyclohexan-1,4-diol) zu nennen. Geeignete andere aromatische Diole entsprechen beispielsweise der Formel HO-$C_6H_4$-X-$C_6H_4$-OH, wobei X für -$CH_2$-, -$C(CH_3)_2$-, -$C(CF_3)_2$-, -O-, -S- oder -$SO_2$- steht. Daneben sind auch Bisphenole der Formel HO-$C_6H_4$-$C_6H_4$-OH gut geeignet.

Andere aromatische Dicarbonsäuren sind bevorzugt Benzoldicarbonsäuren, Naphtalindicarbonsäuren, beispielsweise Naphthalin-1,4- oder -1,6-dicarbonsäure, Biphenyl-x,x'-dicarbonsäuren, insbesondere Biphenyl-4,4'-dicarbonsäure, Diphenylacetylen-x,x'-dicarbonsäuren, insbesondere Diphenylacetylen-4,4'-dicarbonsäure, oder Stilben-x,x'-dicarbonsäuren. Von den cycloaliphatischen Dicarbonsäuren sind Cyclohexandicarbonsäuren, insbesondere Cyclohexan-1,4-dicarbonsäure, zu nennen. Von den aliphatischen Dicarbonsäuren sind die ($C_3$ bis $C_{19}$)-Alkandisäuren besonders geeignet, wobei der Alkanteil geradkettig oder verzweigt sein kann.

Die Herstellung der Polyester kann z. B. nach dem Umesterungsverfahren erfolgen. Dabei geht man von Dicarbonsäureestern und Diolen aus, die mit den üblichen Umesterungskatalysatoren wie Zink-, Calcium-, Lithium-, Magnesium- und Mangan-Salzen umgesetzt werden. Die Zwischenprodukte werden dann in Gegenwart allgemein üblicher Polykondensationskatalysatoren wie Antimontrioxid, Titan-, Germanium- oder Aluminium-Salzen polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

## Polymere für die siegelfähige Deckschicht A:

Die durch Coextrusion auf die Basisschicht B aufgebrachte siegelfähige Deckschicht A besteht zu mindestens 70 Gew.-%, bevorzugt mindestens 80 Gew.-% und besonders bevorzugt mindestens 90 Gew.-%, aus Copolyestern, die überwiegend aus Terephthalsäure-Einheiten und aus Butan-1,4-diol- und Neopentylglykol-(2,2-Dimethyl-1,3-dihydroxypropan)-Einheiten zusammengesetzt sind. Die restlichen Monomereinheiten stammen aus anderen aliphatischen, cycloaliphatischen oder aromatischen Diolen bzw. Dicarbonsäuren wie sie auch in der Basisschicht vorkommen können. Die bevorzugten Copolyester sind solche, die aus Etylenterephthalat-Einheiten und aus Butylenterephthalat- und Neopentylenterephthalat-Einheiten aufgebaut sind. Der Anteil an Butylenterephthalat beträgt 40 bis 90 Mol-% und der Anteil an Neopentylenterephthalat 10 bis 40 Mol-%. Bevorzugt sind Copolyester, bei denen der Anteil an Butylenterephthalat 50 bis 85 Mol-%, an Neopentylenterephthalat 10 bis 35 Mol-% und an Ethylenglykol 0 bis 15 Mol-% beträgt, und besonders bevorzugt sind Copolyester, bei denen der Anteil an Butylenterephthalat 60 bis 80 Mol-%, an Neopentylenterephthalat 15 bis 30 Mol-% und an Ethylenglykol 5 bis 10 Mol-% beträgt.

Siegeleigenschaften der siegelfähigen Deckschicht A:

Die gewünschten Siegeleigenschaften der Deckschicht A werden aus der Kombination der Eigenschaften des verwendeten Copolyesters, der Deckschichtdicke und dem Partikelgehalt erhalten.

Die siegelfähige Deckschicht A hat gegenüber sich selbst eine Mindestsiegeltemperatur von kleiner 105 °C, bevorzugt kleiner 100 °C und besonders bevorzugt kleiner 95 °C. Die Siegelnahtfestigkeit (diese wird bei 140 °C, 4 bar, 0,5 s gemessen) beträgt mindestens 2,0 N/15 mm, bevorzugt 2,5 N/15 mm, besonders bevorzugt 3,0 N/15 mm Folienbreite.

Erfindungsgemäß kann die Deckschicht (A) Partikel enthalten. Typische Partikel, die in den Deckschichten (A) verwendet werden, sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder partikelförmige Polymere wie z. B. vernetzte Polystyrol- oder Arcrylat-Partikel. Die Menge der Partikel liegt im Bereich von 0 bis 0,5 Gew.-%, bevorzugt von 0,01 bis 0,4 Gew.-%, besonders bevorzugt von 0,02 bis 0,3 Gew.-% (bezogen auf das Gewicht der Deckschicht A). Der $d_{50}$-Wert der Partikel liegt bevorzugt zwischen 1 und 10 $\mu$m.

**Polymere für die nicht siegelfähige Deckschicht C:**

Für die andere, nicht siegelfähige Deckschicht C können prinzipiell die gleichen Polymere verwendet werden wie sie zuvor für die Basisschicht B beschrieben wurden. Die Mindestsiegeltemperatur dieser Deckschicht C liegt bevorzugt deutlich über 200 °C.

Die Deckschicht C enthält zur Verbesserung des Wickelverhaltens und der Verarbeitbarkeit inerte Partikel. Die Konzentration der inerten Partikel in der Deckschicht C beträgt mehr als 0,05 Gew.-%, bevorzugt mehr als 0,10 Gew.-% und besonders bevorzugt mehr als 0,15 Gew.%, und richtet sich im Wesentlichen nach den zu erzielenden optischen Eigenschaften der Folie.

Die Polyesterfolie kann transparent, weiß, opak, glänzend oder matt sein. Diese verschiedenen optischen Eigenschaften erreicht man beispielsweise durch die Zugabe von unterschiedlichen Mengen an Additiven wie Bariumsulfat, Calciumcarbonat, amorpher Kieselsäure oder Titandioxid in unterschiedlichen mittleren Teilchengrößen ($d_{50}$). Diese Additive können sowohl in der Basisschicht als auch in den Deckschichten A und C enthalten sein.

Alle Schichten können zusätzlich übliche Additive wie beispielsweise UV-Stabilisatoren, Flammhemmer oder Hydrolysestabilisatoren enthalten. Diese Additive werden zweckmäßig dem Polymer bzw. der Polymermischung bereits vor dem Aufschmelzen zugesetzt.

Bei der Folie liegt die Dicke der siegelfähigen Deckschicht A im Bereich von 0,5 bis 10,0 $\mu$m, vorzugsweise im Bereich von 0,7 bis 7,0 $\mu$m, besonders bevorzugt im Bereich von 1,0 bis 5,0 $\mu$m.

Die Gesamtdicke der erfindungsgemäßen Polyesterfolie kann innerhalb bestimmter Grenzen variieren. Sie beträgt vorzugsweise 10 bis 125 $\mu$m, besonders bevorzugt 12 bis 100 $\mu$m, wobei die Schicht B einen Anteil von vorzugsweise 30 bis 90 % an der Gesamtdicke hat.

Das Herstellungsverfahren für Polyesterfolien wird z. B. beschrieben im "Handbook of Thermoplastic Polyesters, Ed. S. Fakirov, Wiley-VCH, 2002" oder im Kapitel "Polyesters, Films" in der "Encyclopedia of Polymer Science and Engeneering, Vol. 12, John Wiley & Sons, 1988". Bei dem bevorzugtem Extrusionsverfahren zur Herstellung der Folie wird das aufgeschmolzene Polymermaterial gegebenenfalls mit den Additiven durch eine Schlitzdüse extrudiert und als weitgehend amorphe Vorfolie auf einer Kühlwalze abgeschreckt. Diese Folie wird anschließend erneut erhitzt und in mindestens einer Richtung - entweder in Maschinenrichtung (MD) oder in Querrichtung (TD) -, bevorzugt aber in Längs- und Querrichtung bzw. in Quer- und Längsrichtung bzw. in Längs-, in Quer- und nochmals in Längsrichtung und/oder Querrichtung, verstreckt ("orientiert"). Die Folientemperaturen im Streckprozess liegen im allgemeinen 10 bis 60 °C über der Glasübergangstemperatur Tg des verwendeten Polyesters, das Streckverhältnis der Längsstreckung liegt üblicherweise bei 2,0 bis 6,0, insbesondere bei 3,0 bis 4,5, das der Querstreckung bei 2,0 bis 5,0, insbesondere bei 3,0 bis 4,5, und das der gegebenenfalls durchgeführten zweiten Längs- und Querstreckung bei 1,1 bis 5,0. Die Längsstreckung kann auch gleichzeitig mit der Querstreckung (Simultanstreckung) oder in jeder denkbaren Sequenzfolge durchgeführt werden. Es folgt die Thermofixierung der Folie bei Ofentemperaturen von 180 bis 260 °C, insbesondere von 220 bis 250 °C. Anschließend wird die Folie abgekühlt und gewickelt.

Optional kann die Folie vor der Querstreckung nach den bekannten Verfahren, z. B. mittels Meyer-Rod oder durch Reverse-Gravure-Roll-Coating, in-line beschichtet werden. Eine Beschichtung auf der nicht-siegelfähigen Seite der Folie kann beispielsweise als Haftvermittler für Druckfarben verwendet werden.

Die erfindungsgemäße Folie zeichnet sich durch eine hervorragende Siegelnahtfestigkeit und eine niedrige Mindestsiegeltemperatur aus. Die siegelfähige Deckschicht A siegelt gegen sich selbst, gegen PET, PVC oder Metall (z. B. Aluminium oder ECCS-Stahl).

Bei der Herstellung der Folie ist gewährleistet, dass das Verschnittmaterial (Regenerat) in einer Menge von bis zu 60 Gew.-%, bezogen auf das Gesamtgewicht der Folie, wieder der Extrusion zugeführt werden kann, ohne dass dabei die physikalischen Eigenschaften der Folie nennenswert negativ beeinflusst werden.

Eigenschaften

Die nachstehende Tabelle (Tabelle 1) fasst die wichtigsten Folieneigenschaften noch einmal auf einen Blick zusammen:

**Tabelle 1**

| Eigenschaft | zweckmäßiger Bereich | bevorzugt | besonders bevorzugt | Einheit | Messmethode / Bemerkung |
|---|---|---|---|---|---|
| Mindestsiegeltemperatur (FIN) | < 105 | < 100 | < 95 | °C | 4 bar, 0,5 s |
| Siegelnahtfestigkeit (FIN) | > 2,0 | > 2,5 | > 3,0 | N/15 mm | DIN 55529, 140 °C, 4 bar, 0,5 s |
| Glasübergangstemperatur des Polymers der Deckschicht A | < 70 | < 60 | < 50 | °C | DSC |
| Schmelzpunkt des Polymers der Deckschicht A | < 220 | < 200 | < 180 | °C | DSC |
| Dicke der Deckschicht A | 0,5-10,0 | 0,7-7,0 | 1,0-5,0 | μm | |
| Partikelgehalt der Deckschicht A | 0-0,5 | 0,01-0,4 | 0,02-0,3 | Gew.-% | |
| Partikelgehalt der Deckschicht C | > 0,05 | > 0,10 | > 0,15 | Gew.-% | |

Zur Charakterisierung der Rohstoffe und der Folien wurden im Rahmen der vorliegenden Erfindung die folgenden Messmethoden benutzt:

**Siegelnahtfestigkeit (DIN 55529)**

Zur Bestimmung der Siegelnahtfestigkeit der Folie gegenüber sich selbst werden zwei 15 mm breite Folienstreifen der erfindungsgemäßen Folie mit der Siegelschicht aufeinander gelegt und bei 140 °C, einer Zeit von 0,5 s und einem Druck von 4 bar (Gerät: Brugger Typ NDS, einseitig beheizte Siegelbacke) zusammengepresst. Die Siegelnahtfestigkeit (Höchstkraft) wird unter einem Abzugswinkel von 90° bestimmt (90°-Peel-Methode).

Zur Bestimmung der Siegelnahtfestigkeit der Folie gegenüber PVC wird ein 15 mm breiter Folienstreifen mit der amorphen Seite auf einen gleichgroßen Streifen PVC gelegt. In Abwandlung der oben beschriebenen Methode wird eine Temperatur von 180 °C verwendet. Die Siegelnahtfestigkeit (Höchstkraft) wird aufgrund der Steifigkeit des Substrats unter einem Abzugswinkel von 180° bestimmt.

**Bestimmung der Mindestsiegeltemperatur**

Mit dem Siegelgerät HSG/ET der Firma Brugger werden, wie zuvor bei der Messung der Siegelnahtfestigkeit beschrieben, heißgesiegelte Proben (Siegelnaht 15 mm x 100 mm) hergestellt. Die Siegelnahtfestigkeit wird für verschiedene Temperaturen gemessen. Die Mindestsiegeltemperatur ist die Temperatur, bei der eine Siegelnahtfestigkeit von mindestens 1,0 N/15 mm erreicht wird.

**Glasübergangstemperatur und Schmelzpunkt**

Die Glasübergangstemperatur und der Schmelzpunkt des Polyesters der Deckschicht A werden mit einem DSC-Gerät (Perkin-Elmer Pyris 1) bestimmt (DIN 53765). Die Probe wird mit 20 K/min bis 300 °C aufgeheizt und 10 min bei dieser Temperatur gehalten. Danach wird die Probe möglichst schnell (500 K/min) auf 20 °C abgekühlt. Die Probe wird 10 min bei 20 °C gehalten und mit 20 K/min bis 300 °C aufgeheizt. Um eine bessere Reproduzierbarkeit zu erzielen, werden die Werte der zweiten Aufheizung verwendet.

**Trübung**

Die Trübung wird nach ASTM D 1003 - 52 bestimmt.

**SV-Wert (Standard Viscosity)**

Die Standardviskosität SV (DCE) wird, angelehnt an DIN 53726, bei 25 °C abweichend zur Norm in Dichloressigsäure gemessen. Die intrinsische Viskosität (IV) von Polyethylenterephthalat berechnet sich wie folgt aus der Standardviskosität:

$$IV = [\eta] = 6{,}907 * 10^{-4} \, SV \, (DCE) + 0{,}063096 \, [dl/g]$$

Im Folgenden wird die Erfindung anhand von Beispielen näher erläutert.

**Beispiel 1**

Zur Herstellung der nachfolgend beschriebenen Folie wurden folgende Ausgangsmaterialien verwendet:

Deckschicht (A):

100 Gew.%     Copolyester aus 70 Mol-% Butylenterephthalat, 25 Mol-% Neopentylenterephthalat und 5 Mol-% Ethylenterephthalat mit einem SV-Wert von 950 und einer Glasübergangstemperatur von 43 °C

Basisschicht (B):

100 Gew.-% Polyethylenterephthalat mit einem SV-Wert von 800

Deckschicht (C), Mischung aus:

80 Gew.-%     Polyethylenterephthalat mit einem SV-Wert von 800
20 Gew.-%     Masterbatch aus 99 Gew.-% Polyethylenterephthalat (SV-Wert von 800) und 1 Gew.-% Sylobloc 44 H (synthetisches $SiO_2$ der Fa. Grace, $d_{50}$: 2,5 $\mu$m)

Die o. g. Rohstoffe wurden in je einem Extruder pro Schicht aufgeschmolzen und durch eine dreischichtige Breitschlitzdüse auf eine gekühlte Abzugswalze extrudiert. Die so erhaltene amorphe Vorfolie wurde dann zunächst längs- und anschließend quergestreckt, fixiert und aufgerollt (Enddicke der Folie 12 $\mu$m, Deckschichten je 1 $\mu$m). Die Bedingungen in den einzelnen Verfahrensschritten waren:

| | | |
|---|---|---|
| Längsstreckung: | Temperatur: | 80 - 120 °C |
| | Längsstreckverhältnis: | 4,0 |
| Querstreckung: | Temperatur: | 80 - 135 °C |
| | Querstreckverhältnis: | 4,2 |
| Fixierung: | | 2 s bei 235 °C |

Die Eigenschaften der so erhaltenen Folie sind Tabelle 2 widergegeben.

**Beispiel 2**

Im Vergleich zu Beispiel 1 wurde die Foliendicke auf 20 $\mu$m und die Deckschichtdicke der siegelfähigen Schicht A auf 2,0 $\mu$m bei sonst identischem Folienaufbau und identischer Herstellungsweise angehoben. Die Siegeleigenschaften haben sich hierdurch verbessert, insbesondere ist die Siegelnahtfestigkeit deutlich größer geworden.

**Beispiel 3**

Im Vergleich zu Beispiel 1 wurde die Zusammensetzung der Deckschicht (A) geändert:

Deckschicht (A):

95 Gew.-%   Copolyester aus 70 Mol-% Butylenterephthalat, 25 Mol% Neopentylenterephthalat und 5 Mol-% Ethylenterephthalat mit einem SV-Wert von 950

5 Gew:%   Masterbatch aus 95 Gew.-% Copolyester (SV-Wert von 850) aus 82 Mol-% Ethylenterephthalat und 18 Mol-% Ethylenisophthalat und 5 Gew.-% Sylysia 430 (synthetisches $SiO_2$ der Fa. Fuji/Japan, $d_{50}$: 3,4 $\mu$m)

Das Wickelverhalten der Folie hat sich verbessert.

**Vergleichsbeispiel 1**

Im Vergleich zu Beispiel 1 wurde die Zusammensetzung der Deckschicht (A) geändert (analog EP-B-0 035 835, Beispiel 1), die Dicke der Folie war 15 $\mu$m, die der Deckschicht (A) 2,25 $\mu$m:

Deckschicht (A):

95 Gew.-%   Copolyester aus 82 Mol.-% Ethylenterephthalat und 18 Mol-% Ethylenisophthalat mit einem SV-Wert von 850

5 Gew.%   Masterbatch aus 95 Gew.-% Copolyester (SV-Wert von 850) aus 82 Mol-% Ethylenterephthalat und 18 Mol-% Ethylenisophthalat und 5 Gew.-% Sylysia 430 (synthetisches $SiO_2$ der Fa. Fuji/Japan, $d_{50}$: 3,4 $\mu$m)

**Tabelle 2**

| | B1 | B2 | B3 | V1 |
|---|---|---|---|---|
| Foliendicke ($\mu$m) | 12 | 20 | 12 | 15 |
| Dicke der Deckschichten A ($\mu$m) | 1,0 | 2,0 | 1,0 | 2,25 |
| Partikelgehalt der Deckschichten A (%) | 0 | 0 | 0,25 | 0,25 |
| Mindestsiegeltemperatur (FIN) | 93 | 92 | 95 | 112 |
| Siegelnahtfestigkeit (FIN) | 3,2 | 4,2 | 3,0 | 3,8 |
| Siegelnahtfestigkeit gegen PVC (N/15 mm) | 5,7 | 7,1 | 5,2 | 0,4 |
| Trübung (%) | 1,9 | 2,1 | 2,2 | 2,0 |

**Patentansprüche**

**1.** Coextrudierte, mindestens dreischichtige, biaxial orientierte Polyesterfolie, enthaltend eine Basisschicht B, eine Deckschicht A auf einer Seite der Basisschicht B und eine Deckschicht C auf der anderen, der Deckschicht A gegenüberliegenden Seite der Basisschicht B, wobei

a) die Mindestsiegeltemperatur (FIN=Deckschicht A gegen Deckschicht A) kleiner/gleich 105 °C ist,

b) die Siegelnahtfestigkeit (FIN), gemessen bei 140 °C, 4 bar, 0,5 s, größer als 2,0 N/15 mm ist,

c) die Glasübergangstemperatur der polymeren Hauptkomponente der Deckschicht A kleiner als 70 °C ist,

d) der Schmelzpunkt der polymeren Hauptkomponente der Deckschicht A kleiner als 220 °C ist,

e) die Deckschicht A eine Dicke von 0,5 bis 10,0 µm hat,

f) die Deckschicht A Partikel in einer Konzentration im Bereich von 0 bis 0,5 Gew.-% (bezogen auf das Gewicht der Deckschicht A) enthält,

g) die Deckschicht C Partikel in einer Konzentration von mehr als 0,05 Gew.-% (bezogen auf das Gewicht der Deckschicht C) enthält.

2. Polyesterfolie nach Anspruch 1, wobei die Glasübergangstemperatur der polymeren Hauptkomponente der Deckschicht A kleiner als 60 °C, bevorzugt kleiner als 50 °C, ist.

3. Polyesterfolie nach Anspruch 1 oder 2, wobei die polymere Hauptkomponente der Deckschicht A in dieser Deckschicht zu mindestens 70 Gew.-%, bevorzugt mindestens 80 Gew.-% und besonders bevorzugt mindestens 90 Gew.-% (bezogen auf die Masse der Deckschicht A), enthalten ist.

4. Polyesterfolie nach einem der Ansprüche 1 bis 3, wobei der Schmelzpunkt der polymeren Hauptkomponente der Deckschicht A kleiner als 200 °C, bevorzugt kleiner als 180 °C, ist.

5. Polyesterfolie nach einem der Ansprüche 1 bis 4, wobei die Deckschicht A eine Dicke von 0,7 bis 7,0 µm, bevorzugt 1,0 bis 5,0 µm, aufweist.

6. Polyesterfolie nach einem der Ansprüche 1 bis 5, wobei die siegelfähige Deckschicht A Partikel in einer Konzentration von 0,01 bis 0,4 Gew.-%, bevorzugt von 0,02 bis 0,3 Gew.-% (bezogen auf das Gewicht der Deckschicht A), enthält.

7. Polyesterfolie nach einem der Ansprüche 1 bis 6, wobei die Deckschicht C Partikel in einer Konzentration von mehr als 0,10 Gew.-%, bevorzugt mehr als 0,15 Gew.-%, enthält.

8. Polyesterfolie nach einem der Ansprüche 1 bis 7, wobei die Folie dreischichtig ist und die Basisschicht B, die Deckschicht A und die Deckschicht C umfasst.

9. Polyesterfolie nach einem der Ansprüche 1 bis 8, wobei die siegelfähige Deckschicht A zu mindestens 70 Gew.-%, bevorzugt mindestens 80 Gew.-% und besonders bevorzugt mindestens 90 Gew.-%, aus einem Copolyester besteht, der überwiegend aus Terephthalsäure-Einheiten und aus Butan-1,4-diol- und Neopentylglykol (=2,2-Dimethyl-1,3-dihydroxypropan)-Einheiten zusammengesetzt ist.

10. Polyesterfolie nach Anspruch 9, wobei der Anteil an 1,4-Butylenterephthalat in dem Copolyester 40 bis 90 Mol-% beträgt und der Anteil an Neopentylenterephthalat 10 bis 40 Mol-%.

11. Polyesterfolie nach Anspruch 9 oder 10, wobei der Anteil an 1,4-Butylenterephthalat 50 bis 85 Mol-%, bevorzugt 60 bis 80 Mol-%, der des Neopentylenterephthalats 10 bis 35 Mol-%, bevorzugt 15 bis 30 Mol-%, und der des Ethylenterephthalats 0 bis 15 Mol-%, bevorzugt 5 bis 10 Mol-%, beträgt.

12. Polyesterfolie nach einem der Ansprüche 1 bis 11, wobei die Deckschicht A gegenüber sich selbst (= FIN-Siegelung) eine Mindestsiegeltemperatur von kleiner 100 °C, bevorzugt kleiner 95 °C, aufweist.

13. Polyesterfolie nach einem der Ansprüche 1 bis 12, wobei die Siegelnahtfestigkeit bei FIN-Siegelung Deckschicht A gegen Deckschicht A (gemessen bei 140 °C, 4 bar, 0,5 s) mindestens 2,5 N/15 mm, bevorzugt mindesten 3,0 N/15 mm, Folienbreite beträgt.

14. Verfahren zur Herstellung einer Folie nach Anspruch 1, wobei man die den einzelnen Schichten A, B und C der Folie entsprechenden Schmelzen durch eine Flachdüse coextrudiert, die so erhaltene Folie zur Verfestigung auf einer oder mehreren Walzen abzieht, die Folie anschließend biaxial streckt und die biaxial gestreckte Folie thermofixiert und aufrollt, wobei die Glasübergangstemperatur der polymeren Hauptkomponente der Deckschicht A kleiner als 70 °C ist, der Schmelzpunkt der polymeren Hauptkomponente der Deckschicht A kleiner als 220 °C ist, die Deckschicht A eine Dicke von 0,5 bis 10,0 µm hat, die Deckschicht A Partikel in einer Konzentration im Bereich von 0 bis 0,5 Gew.-% (bezogen auf das Gewicht der Deckschicht A) enthält und die Deckschicht C Partikel in einer Konzentration von mehr als 0,05 Gew.-% (bezogen auf das Gewicht der Deckschicht C) enthält.

15. Verwendung einer Polyesterfolie nach Anspruch 1 als Verpackungsfolie oder Kaschierfolie oder Laminierfolie, bevorzugt zur Siegelung gegen PVC-Folien und metallische Substrate.

**Claims**

1. A coextruded at least three-layer biaxially oriented polyester film comprising a base layer B, a top layer A on one side of the base layer B and a top layer C on the other side of the base layer B opposite the top layer A, wherein

   a) the minimum sealing temperature (FIN = top layer A to top layer A) is less than/equal to 105 °C,
   b) the seal strength (FIN), measured at 140 °C, 4 bar, 0.5 s, is greater than 2.0 N/15 mm,
   c) the glass transition temperature of the polymeric main component of the top layer A is less than 70 °C,
   d) the melting point of the polymeric main component of the top layer A is less than 220 °C,
   e) the top layer A has a thickness of 0.5 to 10.0 μm,
   f) the top layer A contains particles in a concentration in the range from 0 to 0.5 % by weight (based on the weight of the top layer A),
   g) the top layer C contains particles in a concentration of more than 0.05 % by weight (based on the weight of the top layer C).

2. The polyester film as claimed in claim 1, wherein the glass transition temperature of the polymeric main component of the top layer A is less than 60 °C, preferably less than 50 °C.

3. The polyester film as claimed in claim 1 or 2, wherein the polymeric main component of the top layer A is present in this top layer in an amount of at least 70 % by weight, preferably at least 80 % by weight and more preferably at least 90 % by weight (based on the mass of the top layer A).

4. The polyester film as claimed in one of claims 1 to 3, wherein the melting point of the polymeric main component of the top layer A is less than 200 °C, preferably less than 180 °C.

5. The polyester film as claimed in one of claims 1 to 4, wherein the top layer A has a thickness of 0.7 to 7.0 μm, preferably 1.0 to 5.0 μm.

6. The polyester film as claimed in one of claims 1 to 5, wherein the sealable top layer A contains particles in a concentration of 0.01 to 0.4 % by weight, preferably of 0.02 to 0.3 % by weight (based on the weight of the top layer A).

7. The polyester film as claimed in one of claims 1 to 6, wherein the top layer C contains particles in a concentration of more than 0.10 % by weight, preferably more than 0.15 % by weight.

8. The polyester film as claimed in one of claims 1 to 7, wherein the film has three layers and comprises the base layer B, the top layer A and the top layer C.

9. The polyester film as claimed in one of claims 1 to 8, wherein the sealable top layer A consists to an extent of at least 70 % by weight, preferably at least 80 % by weight and more preferably at least 90 % by weight of a copolyester which is composed predominantly of terephthalic acid units and of 1,4-butanediol and neopentyl glycol (=2,2-dimethyl-1,3-dihydroxypropane) units.

10. The polyester film as claimed in claim 9, wherein the proportion of 1,4-butylene terephthalate in the copolyester is 40 to 90 mol% and the proportion of neopentylene terephthalate is 10 to 40 mol%.

11. The polyester film as claimed in claim 9 or 10, wherein the proportion of 1,4-butylene terephthalate is 50 to 85 mol%, preferably 60 to 80 mol%, that of neopentylene terephthalate 10 to 35 mol%, preferably 15 to 30 mol%, and that of ethylene terephthalate 0 to 15 mol%, preferably 5 to 10 mol%.

12. The polyester film as claimed in one of claims 1 to 11, wherein the top layer A has a minimum sealing temperature to itself (= FIN sealing) of less than 100 °C, preferably less than 95 °C.

**13.** The polyester film as claimed in one of claims 1 to 12, wherein the seal seam strength in the case of FIN sealing of top layer A to top layer A (measured at 140 °C, 4 bar, 0.5 s) is at least 2.5 N/15 mm, preferably at least 3.0 N/15 mm, of film width.

**14.** A process for producing a film as claimed in claim 1, wherein the melts corresponding to the individual layers A, B and C of the film are coextruded through a flat die, the film thus obtained is consolidated by drawing it off on one or more rolls, then the film is biaxially stretched and the biaxially stretched film is heatset and rolled up, the glass transition temperature of the polymeric main component of the top layer A being less than 70 °C, the melting point of the polymeric main component of the top layer A being less than 220 °C, the top layer A having a thickness of 0.5 to 10.0 μm, the top layer A containing particles in a concentration in the range from 0 to 0.5 % by weight (based on the weight of the top layer A) and the top layer C containing particles in a concentration of more than 0.05 % by weight (based on the weight of the top layer C).

**15.** The use of a polyester film as claimed in claim 1 as a packaging film or laminating film, preferably for sealing to PVC films and metallic substrates.


**Revendications**

**1.** Feuille de polyester coextrudée orientée biaxialement présentant au moins trois couches, contenant une couche de base B, une couche de recouvrement A sur une face de la couche de base B et une couche de recouvrement C sur l'autre face de la couche de base B, opposée à la couche de recouvrement A, dans laquelle

a) la température de scellage minimale (mode FIN (bords repliés) = couche de recouvrement A contre couche de recouvrement A) est inférieure ou égale à 105 °C,
b) la résistance du cordon de scellage (FIN), mesurée à 140 °C, 4 bars et à 0,5 s, est supérieure à 2,0 N/15 mm,
c) la température de transition vitreuse du composant polymère principal de la couche de recouvrement A est inférieure à 70 °C,
d) le point de fusion du composant polymère principal de la couche de recouvrement A est inférieur à 220 °C,
e) la couche de recouvrement A présente une épaisseur de 0,5 à 10,0 μm,
f) la couche de recouvrement A contient des particules en concentration dans la plage de 0 à 0,5 % en poids (par rapport au poids de la couche de recouvrement A),
g) la couche de recouvrement C contient des particules en concentration supérieure à 0,05 % en poids (par rapport au poids de la couche de recouvrement C).

**2.** Feuille de polyester selon la revendication 1, dans laquelle la température de transition vitreuse du composant polymère principal de la couche de recouvrement A est inférieure à 60 °C, de préférence inférieure à 50 °C.

**3.** Feuille de polyester selon la revendication 1 ou 2, dans laquelle le composant polymère principal de la couche de recouvrement A est contenu dans cette couche de recouvrement à raison d'au moins 70 % en poids, de préférence d'au moins 80 % en poids et, mieux encore, d'au moins 90 % en poids (par rapport à la masse de la couche de recouvrement A).

**4.** Feuille de polyester selon l'une quelconque des revendications 1 à 3, dans laquelle le point de fusion du composant polymère principal de la couche de recouvrement A est inférieur à 200 °C, de préférence inférieur à 180 °C.

**5.** Feuille de polyester selon l'une quelconque des revendications 1 à 4, dans laquelle la couche de recouvrement A présente une épaisseur de 0, 7 à 7, 0 μm, de préférence de 1,0 à 5,0 μm.

**6.** Feuille de polyester selon l'une quelconque des revendications 1 à 5, dans laquelle la couche de recouvrement scellable A contient des particules en concentration de 0,01 à 0, % en poids, de préférence de 0,02 à 0,3 % en poids (par rapport au poids de la couche de recouvrement A).

**7.** Feuille de polyester selon l'une quelconque des revendications 1 à 6, dans laquelle la couche de recouvrement C contient des particules en concentration supérieure à 0,10 % en poids, de préférence supérieure à 0,15 % en poids.

**8.** Feuille de polyester selon l'une quelconque des revendications 1 à 7, dans laquelle la feuille présente trois couches et comprend la couche de base B, la couche de recouvrement A et la couche de recouvrement C.

9. Feuille de polyester selon l'une quelconque des revendications 1 à 8, dans laquelle la couche de recouvrement scellable A est constituée d'au moins 70 % en poids, de préférence d'au moins 80 % en poids et, mieux encore, d'au moins 90 % en poids d'un copolyester qui est composé, dans une large mesure, d'unités acide téréphtalique et d'unités butan-1,4-diol et néopentylglycol (= 2,2-diméthyl-1,3-dihydroxypropane).

10. Feuille de polyester selon la revendication 9, dans laquelle la proportion de téréphtalate de 1, 4-butylène dans le copolyester est de 40 à 90 % en mole et la proportion de téréphtalate de néopentylène est de 10 à 40 % en mole.

11. Feuille de polyester selon la revendication 9 ou 10, dans laquelle la proportion de téréphtalate de 1,4-butylène est de 50 à 85 % en mole, de préférence de 60 à 80 % en mole, celle de téréphtalate de néopentylène est de 10 à 35 % en mole, de préférence de 15 à 30 % en mole, et celle de téréphtalate d'éthylène est de 0 à 15 % en mole, de préférence de 5 à 10 % en mole.

12. Feuille de polyester selon l'une quelconque des revendications 1 à 11, dans laquelle la couche de recouvrement A présente, vis-à-vis d'elle-même (= scellage de type FIN), une température de scellage minimale inférieure à 100 °C, de préférence inférieure à 95 °C.

13. Feuille de polyester selon l'une quelconque des revendications 1 à 12, dans laquelle la résistance du cordon de scellage lors d'un scellage de type FIN de la couche de recouvrement A contre la couche de recouvrement A (mesurée à 140 °C, 4 bars et 0, 5 s) est d'au moins 2,5 N/15 mm, de préférence d'au moins 3,0 N/15 mm, de largeur de feuille.

14. Procédé pour la fabrication d'une feuille selon la revendication 1, dans lequel les masses fondues correspondant aux couches individuelles A, B et C de la feuille sont co-exrudées à travers une filière plate, la feuille obtenue de la sorte est extraite à des fins de solidification sur un ou plusieurs cylindres, la feuille est ensuite étirée biaxialement et la feuille étirée biaxialement est soumise à une thermofixation et enroulée, dans lequel la température de transition vitreuse du composant polymère principal de la couche de recouvrement A est inférieure à 70 °C, le point de fusion du composant polymère principal de la couche de recouvrement A est inférieur à 220 °C, la couche de recouvrement A présente une épaisseur de 0,5 à 10,0 $\mu$m, la couche de recouvrement A contient des particules en concentration dans la plage de 0 à 0,5 % en poids (par rapport au poids de la couche de recouvrement A) et la couche de recouvrement C contient des particules en concentration supérieure à 0,05 % en poids (par rapport au poids de la couche de recouvrement C).

15. Utilisation d'une feuille de polyester selon la revendication 1, comme feuille d'emballage ou comme feuille de contre-collage ou comme feuille de laminage, de préférence pour le scellage contre des feuilles de PVC et des substrats métalliques.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1465973 A
- EP 0035835 A
- EP 0515096 A
- EP 1138480 A
- EP 0035835 B

**In der Beschreibung aufgeführte Nicht-Patentliteratur**

- Handbook of Thermoplastic Polyesters. Wiley-VCH, 2002
- Polyesters, Films. Encyclopedia of Polymer Science and Engeneering. John Wiley & Sons, 1988, vol. 12